## Europäisches Patentamt
## European Patent Office
## Office européen des brevets

(11) Numéro de publication: **0 089 291**
**A1**

(12) # DEMANDE DE BREVET EUROPEEN

(21) Numéro de dépôt: 83400529.0

(51) Int. Cl.³: **A 01 G 9/12**

(22) Date de dépôt: 15.03.83

(30) Priorité: 15.03.82 FR 8204307

(43) Date de publication de la demande:
21.09.83 Bulletin 83/38

(84) Etats contractants désignés:
AT BE CH DE GB LI LU NL SE

(71) Demandeur: Almeras, Michel
28 rue Delaporte
F-94700 Maisons Alfort(FR)

(72) Inventeur: Almeras, Michel
28 rue Delaporte
F-94700 Maisons Alfort(FR)

(74) Mandataire: Viard, Jean
Cabinet VIARD 28 bis, avenue Mozart
F-75016 Paris(FR)

(54) Dispositif d'agencement de plantes.

(57) Dispositif d'agencement de plantes, notamment pour plantes vertes d'intérieur comprenant au moins un bac et au moins un tuteur.

Selon l'invention, le bac (1) comprend des moyens (3) pour assurer la fixation des tuteurs (4), ceux-ci étant réunis à leur partie supérieure par des entretoises (6) au moyen de pièces de raccordement (5).

Applications : Réalisation d'aménagement divers de plantes dans les bureaux et les appartements.

FIG.1a

EP 0 089 291 A1

La présente invention a pour objet un dispositif d'agencement de plantes destiné en particulier, mais non exclusivement, à permettre des dispositions variées de plantes vertes dans les bureaux ou les appartements.

Le développement du goût de la clientèle pour la culture des plantes vertes a conduit corrélativement au développement d'un grand nombre de bacs à plantes qui permettent d'obtenir, en permanence, le degré d'humidité et l'aération nécessaires à la croissance des plantes qui y sont installées, des aliments étant fournis de surcroît. C'est ainsi qu'il est connu d'installer au fond des bacs à plantes des grilles supportant une mèche plongeant dans une réserve d'eau.

On sait, par ailleurs, qu'au delà d'une certaine hauteur, il est nécessaire de guider les plantes par des tuteurs sur lesquels les tiges des plantes sont maintenues par différents moyens. Lorsque le tuteur n'est plus suffisamment haut, il est remplacé par un tuteur plus long. Ces tuteurs sont généralement enfichés en terre. Toutefois cette solution classique trouve rapidement ses limites dans la mesure où la hauteur de terre dans laquelle on peut enfoncer des tuteurs est limitée, contrairement à ce qui se passe en pleine terre. Ceci est encore plus vrai dans les bacs modernes où une réserve d'eau, placée à la partie inférieure du bac réduit encore l'espace disponible pour la terre, et également dans le cas de l'"hydroculture" où la terre est remplacée par un milieu de billes d'argile peu dense.

La présente invention, basée sur l'idée que le maintien des tuteurs doit être rendu indépendant de la terre, a pour objet de remédier à cet inconvénient et de permettre la réalisation d'une véritable architecture intérieure à l'aide de plantes.

Selon la présente invention, le dispositif d'agencement de plantes comprenant au moins un bac renfermant de la terre ou tout autre milieu est caractérisé en ce que des moyens solidaires du bac sont prévus pour la fixation d'au moins un tuteur. Les tuteurs peuvent ainsi être solidement maintenus, indépendamment du milieu dans lequel croissent les plantes.

Selon une autre caractéristique de l'invention, des points de fixation des tuteurs sont formés à la partie supérieure du bac. Dans un souci esthétique, ces points de fixation peuvent être constitués par des fourreaux à l'intérieur desquels peuvent être introduites les extrêmités inférieures des tuteurs.

Selon encore une autre caractéristique de l'invention, les tuteurs sont constitués par des éléments longilignes modulaires et par des éléments de raccordement des éléments longilignes.

D'autres caractéristiques et avantages de l'invention apparaîtront au cours de la description qui va suivre de modes de réalisation particuliers, donnés uniquement à titre d'exemples non limitatifs, en regard des dessins qui représentent :

- Les Figs 1 et 1a, des schéma de montage d'un premier dispositif selon l'invention;
- Les Figs 2 à 4a, un autre mode de réalisation;
- Les Figs 5 et 6, respectivement un élément de raccordement et un schéma de montage de tuteurs sur un tel élément;
- La Fig.7, un exemple d'agencement de plantes;
- Les Figs. 8 et 9, deux autres modes de réalisation.

La présente invention a donc pour objet un système de tuteurs qui soit suffisamment rigide pour permettre différentes configurations, d'une part, et qui soit, d'autre part, solidement assujetti sur les bacs eux-mêmes.

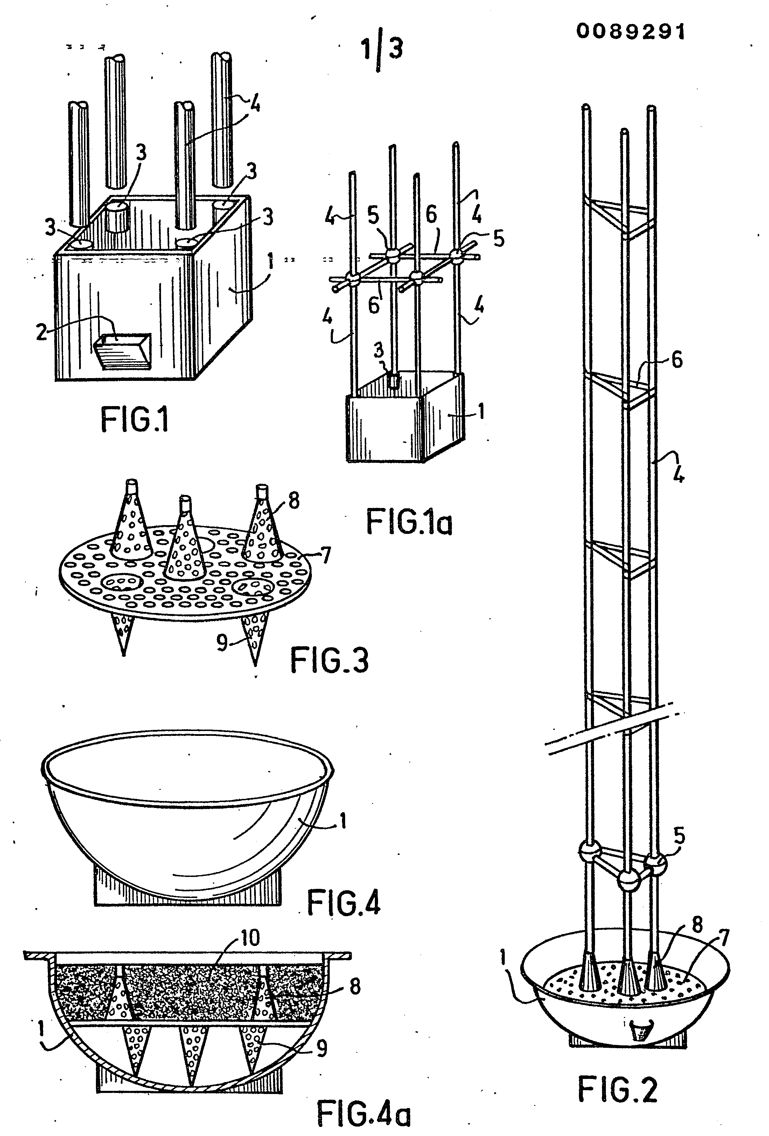

Sur la Fig.1, le bac 1 comprend une réserve d'eau dont seul l'orifice d'introduction 2 apparaît sur la Fig., un support de panier à terreau (non représenté) et quatre supports de tuteurs 3 en forme de fourreaux cylindriques à fond plein ou légèrement coniques. Le nombre de tuteurs effectivement montés dépend bien entendu, de l'aménagement

3   **0089291**

désiré. Dans le cas où quatre tuteurs 4 sont montés (Fig.1a) ils sont avantageusement réunis, à une hauteur adequate par des entretoises 6, au moyen de pièces de raccordement 5 qui seront décrites par la suite. Grâce à ces pièces de raccordement, un autre ensemble de tuteurs peut également être disposé au-dessus du premier. On obtient ainsi un ensemble modulaire de tuteurs dont la hauteur peut être adaptée à tout problème.

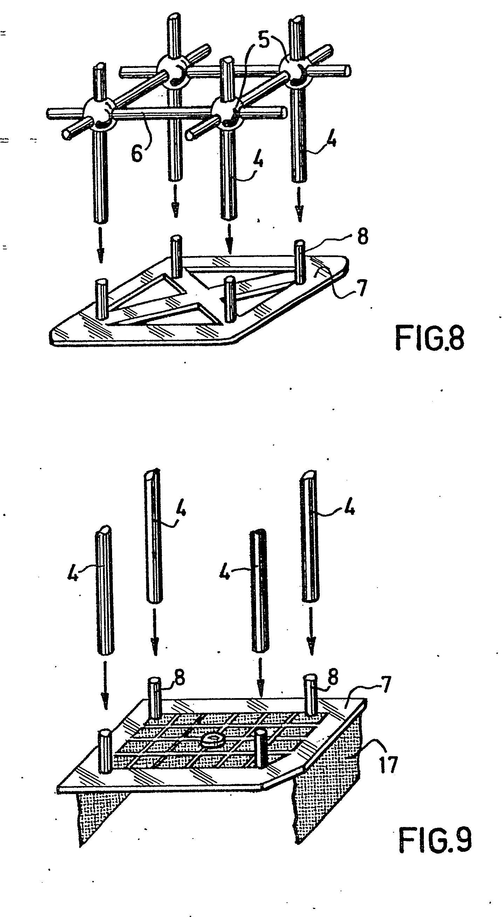

Sur les Figs 1 et 1a, les tuteurs sont fixés directement sur les cloisons du bac 1. On pourrait également les fixer à l'extérieur de celui-ci et à une hauteur quelconque. Il faut toutefois que les bacs aient été prévus pour une utilisation avec l'ensemble de tuteurs selon l'invention. Celle-ci peut également être mise en oeuvre avec des bacs classiques. Sur la Fig.8, une pièce intermédiaire 7 disposée au fond d'un bac du commerce n'ayant pas de fixations de tuteurs intégrées, sert de base de tuteurs 4, ceux-ci étant insérés dans les fourreaux 8 solidaires de la pièce 7. La pression de la terre ou du terreau qui est versé au dessus de la plaque 7 assure une tenue parfaite de celle-ci et par suite des tuteurs. Pratiquement, des longueurs de tuteurs 4 sont montées dans la pièce 7 avant introduction de la terre de sorte que au moins leurs extrêmités supérieures émergent du bac après cette introduction. Grâce aux pièces de raccordement 5 et aux entretoises 6, on peut construire un système approprié et extensible de tuteurs 4. La Fig.9 représente un mode de réalisation analogue mais dans lequel la pièce 7 est constituée par une grille supportant une mèche 17 trempant dans la réserve d'eau (non représentée).

Les Figs 2 à 4a représentent un autre mode de réalisation dans lequel le bac 1 affecte la forme d'une vasque (Fig.4). Il serait alors difficile de prévoir des fixations dans les angles, encore qu'il soit possible de mouler des fourreaux dans la paroi latérale. Le panier porte-terreau est représenté sur la Fig.3 et il se compose d'une grille 7 en forme de disque à partir de la surface de laquelle font saillie des cônes 8 et 9 respectivement vers le haut et vers le bas de la Fig. Les cônes 8 sont terminés à leurs parties supérieures par des cylindres sur lesquels viennent s'enfiler

les extrêmités creuses des tuteurs 4. Les cônes perforés 8 ont pour but d'une part d'assurer l'aération de la terre et la fixation des tuteurs alors que les cônes 9 assurent d'une part le maintien de la grille 7 contre le fond du bac, dégageant ainsi une place pour la réserve d'eau, et d'autre part la formation de conduits capillaires à travers lesquels l'eau de la réserve pénètre peu à peu dans la terre. Ces conduits capillaires résultent du remplissage des cônes 9 par la terre 10 ( Fig. 4a).

Comme précédemment, la stabilité des tuteurs résulte de la pression exercée par le terreau sur la grille 7. Il est néanmoins souhaitable que le système de tuteurs 4 soit autostable et, comme représenté sur la Fig.2, les trois tuteurs 4 sont de préférence réunis par des entretoises 6, au moyen de pièces 5.

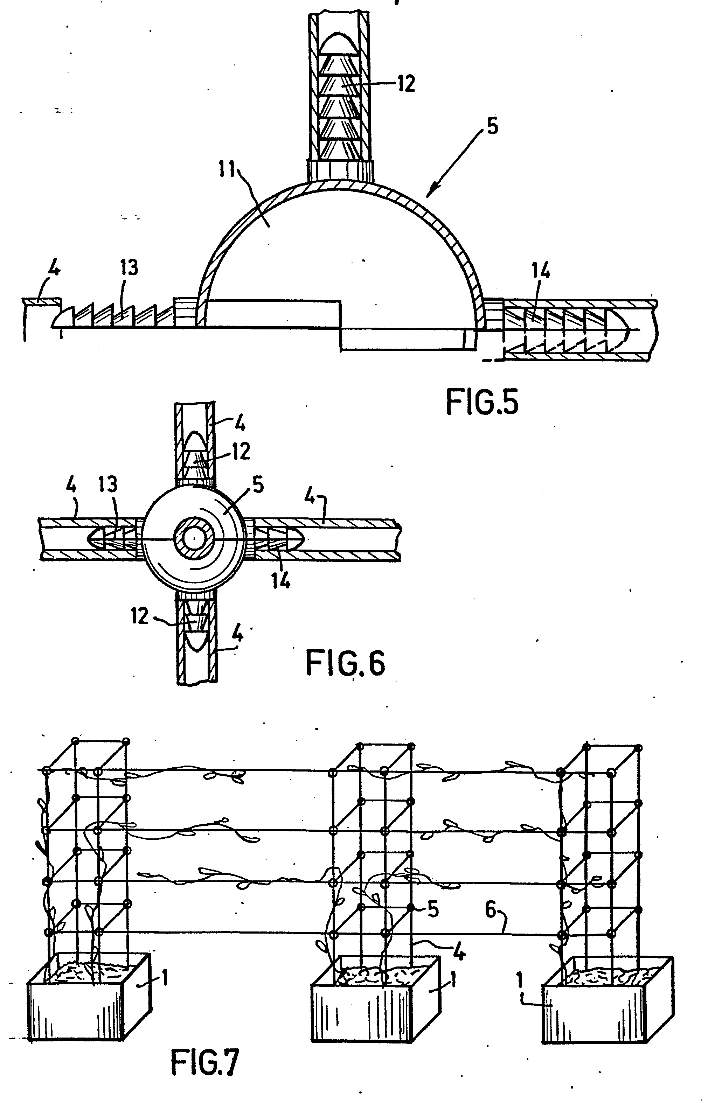

Un exemple de pièces de raccordement est illustré par les Figs 5 et 6, la Fig.5 étant une vue en élévation d'une demi pièce moulée, par exemple, en matière plastique. Une pièce complète s'obtient par encliquetage de deux demi pièces identiques. Une demi pièce se compose d'une demi sphère 11 à partir de la périphérie de laquelle s'étend radialement un téton 12 qui peut présenter des aspérités d'accrochage permettant un bon appui des tuteurs. D'une manière générale, il est souhaitable qu'il existe un encliquetage qui assure l'utilisateur d'un montage correct. Perpendiculairement au téton 12, s'étendent deux demi tétons 13 et 14 qui forment des tétons complets par assemblage de deux demi pièces 5. Il est également possible de prévoir dans la demi sphère 11 de simples trous à l'intérieur desquels les extrêmités des tuteurs peuvent être insérées. Dans l'exemple représenté, les fixations peuvent être assurées selon six directions orthogonales mais il est évident que la direction des tétons ou des axes des trous peut être quelconque et, par exemple, dans le cas de la Fig.2, les entretoises forment des angles de 60 degrés.

La Fig.6 représente une coupe d'une pièce 5 sur laquelle sont raccordés quatre tuteurs 4 s'étendant dans des directions respectivement perpendiculaires. Les tuteurs contribuent au verrouillage des deux demi pièces l'une sur l'autre puisqu'ils enserrent les deux moitiés des tétons 13 et 14. Le nombre de tétons ou de trous et leurs directions ne sont pas limités, sinon par des considérations pratiques et il est , par exemple,possible de prévoir des amorces de direction à 45° par rapport au plan horizontal.

La Fig.7, représente une application du dispositif selon l'invention qui consiste dans la réalisation d'un "mur rideau" en feuillage. Trois bacs 1 sont alignés et des tuteurs, fixés sur les bacs comme il a été dit précédemment s'élèvent en hauteur et sont rendus rigides par des entretoises 6, grâce à des pièces de raccordement 5. Les plantes courent le long du réseau ainsi constitué. Leur croissance ne pose alors aucun problème puisqu'il est possible de les orienter à volonté.

Les tuteurs 4 sont avantageusement réalisés à l'aide de tiges cylindriques, creuses ou pleines, dont la longueur est déterminée, la hauteur désirée étant obtenue par assemblage de plusieurs tiges dans le prolongement l'une de l'autre.

Le dispositif qui vient d'être décrit se prête admirablement à tout agencement de plantes.

Il va de soi que de nombreuses variantes peuvent être introduites, notamment par substitution de moyens équivalents, sans sortir pour celà du cadre de l'invention.

REVENDICATIONS

1° Dispositif d'agencement de plantes comprenant au moins un bac et au moins un tuteur, caractérisé en ce que des moyens (3,8) mécaniquement solidaires du bac (1) sont prévus pour la fixation des tuteurs (4).

2° Dispositif selon la revendication 1, caractérisé en ce que les moyens (3) précités consistent en des fourreaux dans lesquels pénètre l'extrêmité d'au moins un tuteur (4), lesdits fourreaux étant solidaires des parois du bac (1).

3° Dispositif selon la revendication 1, caractérisé en ce qu'une grille porte-terreau (7) étant disposée au voisinage du fond du bac (1), les moyens (8) consistent en des parties cylindriques entourées, après montage par l'extrêmité creuse d'au moins un tuteur (4).

4° Dispositif selon la revendication 3, caractérisé en ce que la grille (7) est munie d'éléments (9) assurant la portée de la grille (7) sur le fond du bac (1) en ménageant une réserve d'eau.

5° Dispositif selon l'une quelconque des revendications précédentes, caractérisé en ce que les tuteurs (4) sont constitués par des éléments longilignes de longueur déterminée et pouvant être réunis entre eux par des pièces de raccordement (5) et par des entretoises (6).

6° Dispositif selon l'une quelconque des revendications précédentes, caractérisé en ce que les pièces de raccordement (5) sont constituées par assemblage de deux demi sphères (11) identiques à partir desquelles des tétons (12,13,14) font saillie dans des directions différentes.

7° Dispositif selon l'une quelconque des revendications 1 à 5, caractérisé en ce que les pièces re raccordement (5) sont constituées par des sphères percées d'orifices à l'intérieur desquels s'insèrent les extrêmités des tuteurs (4).

FIG.1

FIG.1a

FIG.3

FIG.4

FIG.4a

FIG.2

0089291

**FIG.5**

**FIG.6**

**FIG.7**

FIG.8

FIG.9

Office européen
des brevets

RAPPORT DE RECHERCHE EUROPEENNE

0089291
Numéro de la demande

EP   83 40 0529

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | CH-A- 156 676 (E. KNÜSLI) * Page 1, colonne 2, lignes 16-21; figures 3, 4 * | 1,2 | A 01 G   9/12 |
| | --- | | |
| X | DE-U-1 918 927 (W. PIGGE) * Totalité du document * | 1,2 | |
| | --- | | |
| A | DE-U-7 032 290 (A. MÜLLER) * Revendications 1-4; figures 1-3 * | 3,5 | |
| | --- | | |
| A | CH-A- 320 203 (CONFINA HANDELS- UND VERWALTUNGS-TRUST) * Page 1, lignes 20-55; figures 1, 5-11 * | 5-7 | |
| | --- | | DOMAINES TECHNIQUES RECHERCHES (Int. Cl. ³) |
| A | GB-A-2 036 234 (SIMPLIE SMITH AND JONES LTD.) * Page 1, lignes 66-81; figure 2 * | 7 | A 01 G   9/12 |
| | ----- | | |

Le présent rapport de recherche a été établi pour toutes les revendications

| Lieu de la recherche BERLIN | Date d'achèvement de la recherche 06-06-1983 | Examinateur SCHOFER G |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

OEB Form 1503. 03.82